# EUROPÄISCHE PATENTSCHRIFT

(11) **EP 1 199 227 B1**
(45) Veröffentlichungstag und Bekanntmachung des Hinweises auf die Patenterteilung: **11.05.2005**
(21) Anmeldenummer: 01124287.2
(22) Anmeldetag: 18.10.2001
(51) Int. Cl.: B60R 21/20

(54) **Baugruppe bestehend aus Sitzlehne und Gassack-Modul**
Vehicle seat with integrated airbag module
Siège de véhicule avec coussin gonflable intégré

(30) Priorität: 19.10.2000 DE 20017919 U
(43) Veröffentlichungstag der Anmeldung: 24.04.2002
(73) Patentinhaber: TRW Automotive GmbH, 73553 Alfdorf (DE)
(72) Erfinder: Acker, Dominique, 74417 Gschwend (DE); Loos, Andreas, 73054 Eislingen (DE)
(74) Vertreter: Sties, Jochen, Dipl.-Ing.

(56) Entgegenhaltungen:
- EP-A- 0 644 088
- DE-A- 10 000 768
- DE-A- 19 727 746
- DE-A- 19 915 831
- FR-A- 2 760 701
- US-A- 5 799 971
- US-A- 5 988 674
- US-B1- 6 179 324

## Beschreibung

Die Erfindung betrifft eine Baugruppe bestehend aus einer Sitzlehne und einem Gassack-Modul, wobei die Sitzlehne einen Rahmen, eine Polsterung und ein starres Verkleidungsteil aufweist und wobei das Gassack- Modul einen Schußkanal aufweist, der an dem Rahmen angebracht ist.

Die Sitzlehne ist Teil eines Fahrzeugsitzes, und das Gassack-Modul dient dazu, eine Rückhaltewirkung für einen Fahrzeuginsassen bereitzustellen, insbesondere bei einem Seitenaufprall. Zu diesem Zweck wird ein im Gassack-Modul gefaltet aufgenommener Gassack mit Druckgas beaufschlagt, so daß er sich seitlich der Sitzlehne zwischen dem Oberkörper und gegebenenfalls dem Kopf des Fahrzeuginsassen einerseits sowie der Tür bzw. der Seitenstruktur des Fahrzeugs andererseits entfaltet.

Ein Vorteil bei der Anbringung des Gassack-Moduls in der Sitzlehne besteht darin, daß es sich grundsätzlich immer in derselben Position zum Oberkörper des Fahrzeuginsassen befindet unabhängig davon, ob auf dem Fahrzeugsitz ein sehr großer Fahrzeuginsasse mit nach hinten geschobenem Fahrzeugsitz sitzt oder ein sehr kleiner Fahrzeuginsasse, der den Fahrzeugsitz sehr nahe zum Lenkrad oder zum Armaturenbrett hin verschiebt. Der Nachteil bei der Anbringung des Gassack-Moduls in der Sitzlehne besteht allerdings darin, daß das Gassack-Modul zum einen vergleichsweise gut geschützt aufgenommen werden muß, so daß eine Beschädigung beispielsweise durch im Fahrzeug transportierte Ladung verhindert ist, zum anderen jedoch ein Austreten des sich entfaltenden Gassacks aus der Sitzlehne problemlos möglich sein muß. Um diese an sich widersprüchlichen Forderungen zu erfüllen, gibt es im Stand der Technik eine Vielzahl von Konzepten.

Aus der US-A-5,799,971 ist eine Baugruppe gemäß dem Oberbegriff des Anspruchs bekannt, bei der das Gassack-Modul in der Rückenlehne angebracht ist. Zwischen der Verkleidung und der Polsterung ist ein großer Spalt vorhanden, der hinter dem das Gehäuse des Gassack-Moduls sitzt und der von einer Stoffabdeckung verschlossen ist. Wenn der Gassack entfaltet wird, muß dieser sowohl das Gehäuse des Moduls öffnen als auch die Stoffabdeckung zerstören, damit er aus der Rückenlehne austreten kann.

Aus der DE-A-196 81 575 ist eine Baugruppe bekannt, bei der das Gassack-Modul am Verkleidungsteil der Sitzlehne angebracht ist. Der Bereich des Verkleidungsteils, der an der Polsterung anliegt, ist als Schwenkklappe ausgebildet, die beim Aktivieren des Gasgenerators des Gassack-Moduls und dem davon hervorgerufenen Entfalten des Gassacks nach außen hin, also zur Seitenstruktur des Fahrzeugs, aufklappt, so daß ein Spalt zwischen der Polsterung und dem Verkleidungsteil gebildet ist, durch den hindurch der Gassack austreten kann.

Aus der EP-A-0 776 793 ist ein Fahrzeugsitz bekannt, bei dem das Gassack-Modul in einem separaten Gehäuse seitlich in der Sitzlehne angebracht ist. Das Gehäuse ist mit einer Abdeckklappe versehen, die beim Aktivieren des Gasgenerators vom sich entfaltenden Gassack nach außen gedrückt werden kann, so daß ein Spalt gebildet ist, durch den hindurch sich der Gassack entfaltet.

Weiterhin sind Lösungen bekannt, bei denen die Polsterung der Sitzlehne im Bereich des späteren Spaltes für den Austritt des Gassacks durch eine Reißnaht verschlossen ist, die vom sich entfaltenden Gassack zerstört wird.

Nachteilig bei all diesen bekannten Lösungen ist, daß zum einen der Aufbau der Sitzlehne vergleichsweise kompliziert ist und zum anderen aufgrund der aufwendigen Konstruktion eine Vielzahl von Parametern das Entfalten des Gassacks beeinflußt, so daß der Entfaltungsvorgang nicht zuverlässig reproduzierbar ist.

Die Aufgabe der Erfindung besteht darin, eine Baugruppe der eingangs genannten Art dahingehend weiterzubilden, daß ein besonders einfacher Aufbau erhalten wird, der ein zuverlässiges, jederzeit reproduzierbares Entfalten des Gassacks ermöglicht.

Zu diesem Zweck ist bei einer Baugruppe der eingangs genannten Art vorgesehen, daß sich die Polsterung bis hin zum Verkleidungsteil erstreckt und daß die Polsterung im Bereich des Übergangs zum Verkleidungsteil derart nachgiebig ausgebildet ist, daß durch Verformung der Polsterung ein Spalt zwischen dem Verkleidungsteil und der Polsterung zum Austreten des Gassacks aus der Sitzlehne gebildet werden kann. Bei dieser Konstruktion ergibt sich eine Reihe von Vorteilen. Zum einen ist der Aufbau der Sitzlehne besonders einfach. Es müssen keine besonderen Vorkehrungen getroffen werden, um den Spalt, durch den der Gassack bei seiner Aktivierung austritt, zu verschließen, da dieser Spalt durch die Eigenelastizität der Polsterung geschlossen ist. Weiterhin ist das Verkleidungsteil kein Bestandteil des Gassack-Moduls, so daß hinsichtlich der Materialeigenschaften, des Designs, etc. keine besonderen Anforderungen einzuhalten sind. Schließlich ergibt sich ein exakt reproduzierbares Entfaltungsverhalten, da der einzige Parameter, der den Spalt für den sich entfaltenden Gassack beeinflußt, die Flexibilität der Polsterung ist. Der Widerstand, den die Polsterung dem sich entfaltenden Gassack entgegensetzt, ist jedoch in jedem Fall vergleichsweise gering, so daß Änderungen der Elastizität der Polsterung einen vernachlässigbaren Einfluß auf den Entfaltungsvorgang haben.

Gemäß einer bevorzugten Ausführungsform der Erfindung ist vorgesehen, daß der Spalt zwischen der Polsterung und dem Verkleidungsteil im Seitenbereich der Sitzlehne gebildet ist und daß der Schußkanal gekrümmt ausgebildet ist und sich ausgehend von einer von der Polsterung abgewandten Rückseite des Rahmens hin zum Seitenbereich erstreckt. Durch die Anordnung eines Teils des Gassack-Moduls auf der Rückseite der Sitzlehne kann der Spalt, durch den der Gassack aus der Sitzlehne austritt, vergleichsweise nah an der Rückseite angeordnet werden. Durch die sich daraus ergebende größere Distanz zwischen der Austrittsöffnung des Gasgenerators und dem Toraxbereich eines Fahrzeuginsassen ergibt sich eine größere Tauglichkeit des Gassacks für Rückhaltefälle, bei denen sich der Fahrzeuginsasse außerhalb seiner üblichen, für die Auslegung des Gassack-Moduls angenommenen Position befindet. Weiterhin ergibt sich ein besserer Sitzkomfort im Seitenwangenbereich der Sitzlehne. Durch die Führung des Gassacks im Schußkanal ergibt sich außerdem ein gleichmäßigerer Austritt des Gassacks durch den Spalt zwischen der Polsterung und dem Verkleidungsteil. Das gleichmäßige Austreten des Gassacks durch den Spalt wird weiterhin dadurch unterstützt, daß das vom Gasgenerator bereitgestellte Druckgas sich im Gassack gut verteilt aufgrund des vergleichsweise großen Abstandes zwischen dem Bereich des Gassack-Moduls, in den das Druckgas einströmt, und dem Spalt zwischen der Polsterung und dem Verkleidungsteil. Schließlich stellt der Schußkanal eine Führung für den Gassack dar, so daß ein Verklemmen des Gassacks beim Austreten aus dem Spalt zwischen Polsterung und Verkleidungsteil verhindert ist, selbst wenn es zu Intrusionen von Fahrzeugteilen kommt.

Vorzugsweise ist vorgesehen, daß die Polsterung eine dem Gassack-Modul gegenüberliegende Schrägfläche aufweist. Die Schrägfläche unterstützt das Zurückweichen der Polsterung beim Aktivieren des Gasgenerators und beim Entfalten des Gassacks und führt den Gassack aus der Sitzlehne heraus.

Gemäß der bevorzugten Ausführungsform ist vorgesehen, daß das Gassack-Modul eine Gaslanze aufweist, welche die Verbindung zu einem Gasgenerator darstellt. Auf diese Weise kann der Gasgenerator flexibel in der Sitzlehne angeordnet werden, so daß sich durch die räumliche Trennung von Gasgenerator und Schußkanal die Möglichkeit ergibt, den Gassack sehr kompakt zu packen und das Gassack-Modul entsprechend kompakt auszuführen. Somit ist auch ein Einsatz bei schmalen Fahrzeugen bzw. bei Fahrzeugen mit stark aufbauender Seitenstruktur einsetzbar.

Der Schußkanal des Gassack-Moduls kann durch ein Gehäuse gebildet sein, das vorzugsweise aus Kunststoff besteht und zweiteilig ausgeführt ist. Auf der der Außenseite des Sitzes zugewandten Seite besteht das Gehäuse aus einer Abdeckung und auf der der Innenseite des Sitzes zugewandten Seite aus einem Halteteil. Es kann vorgesehen sein, daß Abschnitte des Gehäuses nach Art einer Klappe bewegt werden, um eine Öffnung zum Austritt des Gassacks freizugeben.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen Seitenansicht eine erfindungsgemäße Baugruppe;
- Figur 2 schematisch einen Schnitt entlang der Ebene II-II von Figur 1 mit dem Gassack-Modul im nicht aktivierten Zustand; und

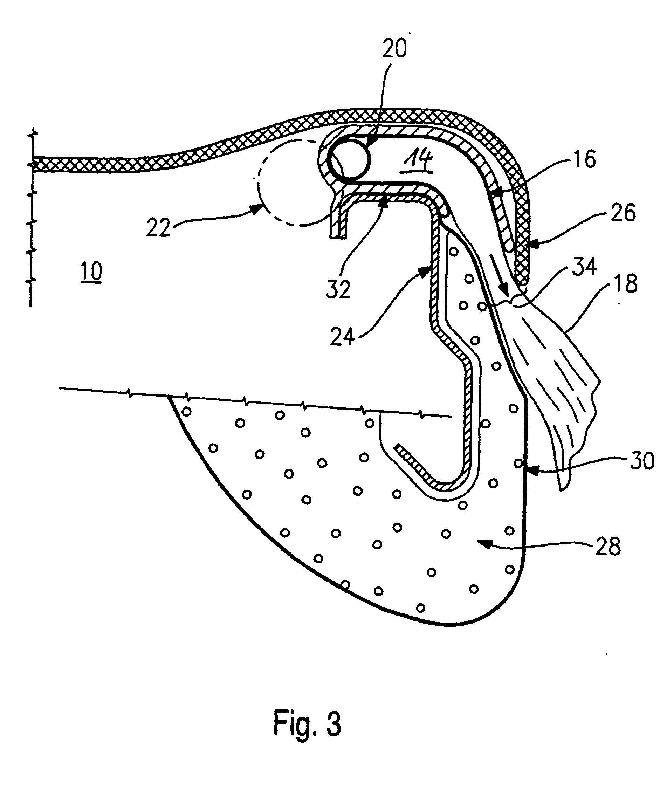

- Figur 3 eine Ansicht entsprechend derjenigen von Figur 2 mit entfaltetem Gassack.

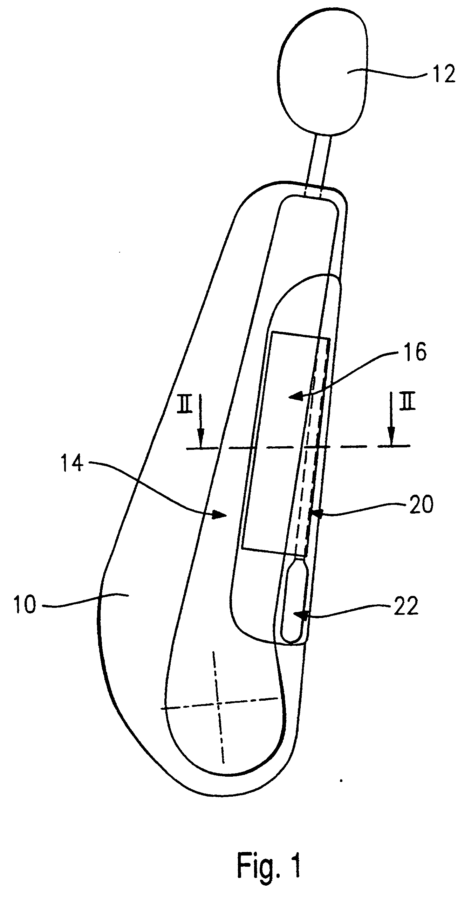

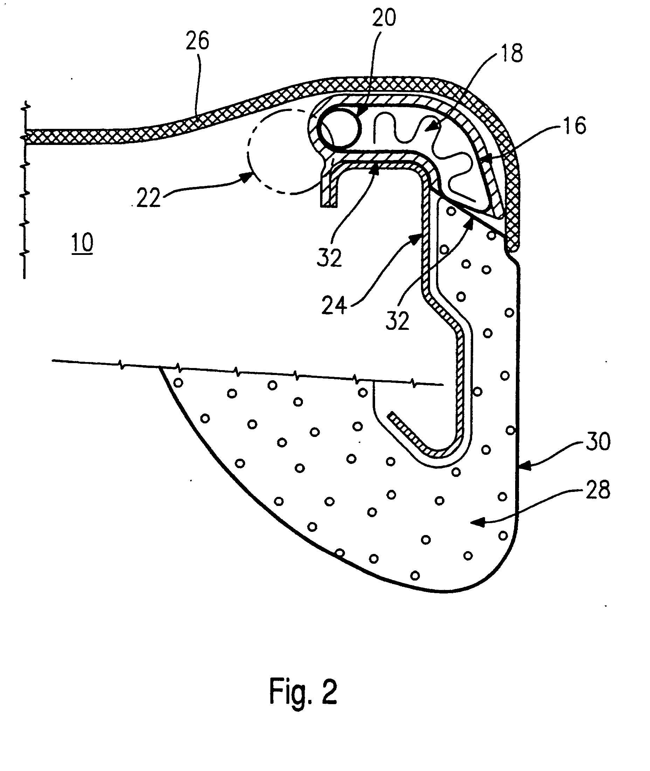

In Figur 1 ist eine Sitzlehne 10 zu sehen, die mit einer Kopfstütze 12 versehen und dafür vorgesehen ist, an der Sitzfläche eines Fahrzeugsitzes angebracht zu werden. In der Sitzlehne 10 ist ein Gassack-Modul 14 angebracht, das aus einem Schußkanal 16, einem in dem Schußkanal angeordneten Gassack 18 (siehe auch Figur 2), einer sich in den Schußkanal 16 hinein erstreckenden Gaslanze 20 sowie einem Gasgenerator 22 besteht.

Wie in Figur 2 zu sehen ist, weist die Sitzlehne 10 einen Rahmen 24 auf, der einen zur Rückseite der Sitzlehne gerichteten, in Figur 2 oben angeordneten Bereich sowie einen Seitenbereich aufweist, der in Figur 2 rechts angeordnet ist. Auf der Rückseite der Sitzlehne erstreckt sich ein Verkleidungsteil 26, das aus einem formbeständigen Kunststoff besteht, von der Rückseite bis hin zur Außenseite der Seitenwange der Sitzlehne. Am Rahmen 24 ist eine Polsterung 28 angebracht, die sich um den Rahmen 24 herum auf der Außenseite der Sitzlehne bis hin zum Verkleidungsteil 26 erstreckt. Die Polsterung 28 ist von einem Bezugsstoff 30 umgeben, der am Verkleidungsteil 26 anliegt und dann in das Innere der Sitzlehne hineinläuft, wo er am Rahmen 24 im Bereich der Rückseite befestigt ist.

In diesem Bereich des Rahmens 24 ist auch der Schußkanal 16 des Gassack-Moduls angeordnet. Wie in Figur 2 zu sehen ist, besteht der Schußkanal aus einem ersten Abschnitt 32, in welchem die Gaslanze 20 und ein Teil des Gassacks 18 angeordnet sind und der sich etwa in der Ebene der Rückseite der Sitzlehne erstreckt. An den ersten Abschnitt schließt sich ein gekrümmter Abschnitt an, an den sich wiederum zur Polsterung 28 hin ein gerader Abschnitt anschließt. Dem Schußkanal 16 gegenüberliegend ist die Polsterung 28 mit einer Schrägfläche 32 ausgebildet, über die der Bezugsstoff 30 vom Verkleidungsteil 26 hin zum Rahmen 24 verläuft.

Der Schußkanal 16 ist ebenso wie das Verkleidungsteil 26 aus einem formstabilen Werkstoff gefertigt. Der Begriff "formstabil" wird dabei so verstanden, daß sowohl das Verkleidungsteil als auch der Schußkanal bei den Kräften, die bei der Aktivierung des Gasgenerators und beim Entfalten des Gassacks auftreten, keine großen Formänderungen erfahren, also abgesehen von einer vernachlässigbaren, durch die Eigenelastizität des Materials begründeten Biegung von den auftretenden Kräften nicht verbogen oder ausgelenkt werden.

Wie in Figur 2 zu sehen ist, ist das Gassack-Modul vom Außenrahmen der Sitzlehne aus nicht zugänglich, da die Polsterung 28 durch ihre Eigenelastizität am Verkleidungsteil 26 anliegt. Aufgrund der Elastizität der Polsterung 28 kann jedoch, wenn der Gasgenerator 22 aktiviert wird, der von dem dann erzeugten Druckgas beaufschlagte Gassack 18 die Polsterung 28 beginnend mit der Schrägfläche 32 zum Rahmen 24 hin zusammendrücken, so daß ein Spalt 34 zwischen der Polsterung und dem Bezugsstoff 30 einerseits und dem Verkleidungsteil 26 andererseits entsteht. Durch diesen Spalt 34 hindurch kann sich der Gassack 18, zusätzlich geführt vom Schußkanal 16, dem Bezugsstoff 30 und dem Verkleidungsteil 26, seitlich der Sitzlehne entfalten.

## Patentansprüche

1. Baugruppe bestehend aus einer Sitzlehne (10) und einem Gassack-Modul (14), wobei die Sitzlehne einen Rahmen (24), eine Polsterung (28) und ein starres Verkleidungsteil (26) aufweist und wobei das Gassack-Modul einen Schußkanal (16) aufweist, der an dem Rahmen angebracht ist, **dadurch gekennzeichnet, daß** sich die Polsterung (28) bis hin zum Verkleidungsteil (26) erstreckt und daß die Polsterung (28) im Bereich des Übergangs zum Verkleidungsteil derart nachgiebig ausgebildet ist, daß durch Verformung der Polsterung ein Spalt (34) zwischen dem Verkleidungsteil (26) und der Polsterung (28) zum Austreten des Gassacks aus der Sitzlehne gebildet werden kann.

2. Baugruppe nach Anspruch 1, **dadurch gekennzeichnet, daß** der Spalt (34) zwischen der Polsterung (28) und dem Verkleidungsteil (26) im Seitenbereich der Sitzlehne gebildet ist.

3. Baugruppe nach Anspruch 2, **dadurch gekennzeichnet, daß** der Schußkanal (16) gekrümmt ausgebildet ist und sich ausgehend von einer von der Polsterung (28) abgewandten Rückseite des Rahmens (24) hin zum Seitenbereich erstreckt.

4. Baugruppe nach einem der vorhergehenden Ansprüche, **dadurch gekennzeichnet, daß** die Polsterung eine dem Gassack-Modul gegenüberliegende Schrägfläche (32) aufweist.

5. Baugruppe nach einem der vorhergehenden Ansprüche, **dadurch gekennzeichnet, daß** das Gassack-Modul eine Gaslanze (20) aufweist, welche die Verbindung zu einem Gasgenerator (22) darstellt.

## Claims

1. An assembly consisting of a backrest (10) and an airbag module (14), the backrest having a frame (24), a padding (28) and a rigid covering part (26), and the airbag module having an ejection channel (16) that is attached to the frame, **characterized in that** the padding (28) extends as far as to the covering part (26), and that the padding (28) in the area of the transition to the covering part is configured so as to be so pliant that a deformation of the padding can produce a gap (34) between the covering part (26) and the padding (28) for the airbag to emerge from the backrest.

2. The assembly according to Claim 1, **characterized in that** the gap (34) between the padding (28) and the covering part (26) is formed in the side area of the backrest.

3. The assembly according to Claim 2, **characterized in that** the ejection channel (16) is configured so as to be curved and extends starting from a rear side of the frame (24) facing away from the padding (28) toward the side area.

4. The assembly according to any of the preceding claims, **characterized in that** the padding has a slanted surface (32) lying opposite the airbag module.

5. The assembly according to any of the preceding claims, **characterized in that** the airbag module has a gas lance (20) that constitutes the connection to a gas generator (22).

## Revendications

1. Ensemble constitué par un dossier (10) et un module de coussin à gaz (14), le dossier présentant un cadre (24), un rembourrage (28) et une partie de revêtement (26) rigide et le module de coussin à gaz présentant un canal d'éjection (16) qui est monté sur le cadre, **caractérisé en ce que** le rembourrage (28) s'étend jusqu'à la partie de revêtement et **en ce que** le rembourrage (28) dans la zone de transition vers la partie de revêtement est si souple que par la déformation du rembourrage, une fente (34) peut se former entre la partie de revêtement (26) et le rembourrage (28) pour faire sortir le coussin à gaz hors du dossier.

2. Ensemble selon la revendication 1, **caractérisé en ce que** la fente (34) entre le rembourrage (28) et la partie de revêtement (26) est formée dans la zone latérale du dossier.

3. Ensemble selon la revendication 2, **caractérisé en ce que** le canal d'éjection (16) est réalisé courbe et s'étend depuis une face postérieure du cadre (24), détournée du rembourrage (28), jusqu'à la zone latérale.

4. Ensemble selon l'une des revendications précédentes, **caractérisé en ce que** le rembourrage présente une surface oblique (32) opposée au module de coussin à gaz.

5. Ensemble selon l'une des revendications précédentes, **caractérisé en ce que** le module de coussin à gaz présente une lance d'injection de gaz (20) qui constitue la liaison avec un générateur de gaz (22).
